# EUROPÄISCHE PATENTSCHRIFT

(11) **EP 3 163 389 B1**
(45) Veröffentlichungstag und Bekanntmachung des Hinweises auf die Patenterteilung: **19.02.2020**
(21) Anmeldenummer: 15192338.0
(22) Anmeldetag: 30.10.2015
(51) Int. Cl.: G05B 19/042

(54) **VERFAHREN ZUR KONFIGURATION VON FELDGERÄTEN UND FELDGERÄT MIT EINER KONFIGURATION FÜR ZWEI BUSSYSTEME**
METHOD FOR CONFIGURING FIELD DEVICES AND FIELD DEVICE HAVING A CONFIGURATION FOR TWO BUS SYSTEMS
PROCEDE DE CONFIGURATION D'APPAREILS DE TERRAIN ET APPAREIL DE TERRAIN AYANT UNE CONFIGURATION POUR DEUX SYSTEMES DE BUS

(43) Veröffentlichungstag der Anmeldung: 03.05.2017
(73) Patentinhaber: Bürkert Werke GmbH, 74653 Ingelfingen (DE)
(72) Erfinder: Fischer, Marcus, 74246 Eberstadt (DE); Merkle, Sebastian, 74653 Ingelfingen (DE); Schmötzer, Ralf, 74677 Hohebach (DE)
(74) Vertreter: Prinz & Partner mbB

(56) Entgegenhaltungen:
- EP-A2- 2 495 624
- DE-A1-102011 079 756
- DE-A1-102011 107 321
- US-A1- 2005 123 884
- US-A1- 2007 282 463
- US-A1- 2012 166 609
- US-A1- 2013 031 249

## Beschreibung

### GEBIET DER ERFINDUNG

Die vorliegende Erfindung betrifft Feldbussysteme, Feldgeräte und Verfahren für Feldbussysteme und Feldgeräte.

### HINTERGRUND

Funktionen und Eigenschaften bspw. von CANopen-Geräten (Feldgeräten) werden weitgehend über Objekte beschrieben und in einem Objektverzeichnis verwaltet. Das Objektverzeichnis wird in elektronischer Form in sogenannten EDS-Dateien (Electronic Data Sheet) abgebildet. EDS-Dateien sind fester Bestandteil der Standardisierung im CANopen-Umfeld (CiA DS306 und CiA DS311) und haben eine grundlegende Bedeutung, wenn es um die Konfiguration in CANopen-Netzwerken geht. Das vom CiA spezifizierte Dateiformat stellt sicher, dass die Gerätebeschreibungen von Werkzeugen (zum Beispiel ProCANopen) unterschiedlicher Softwarehersteller gelesen und verarbeitet werden können. Eine EDS-Datei (elektronisches Datenblatt) ist somit ein Beispiel für eine Gerätebeschreibungsdatei, die auf einem Feldgerät als Firmware fest gespeichert ist und alle Informationen über die gerätespezifischen Parameter sowie Betriebsarten des Gerätes enthält. Durch die Gerätebeschreibungsdatei wird das Gerät ordnungsgemäß konfiguriert bzw. in Betrieb genommen.

Grundsätzlich können Feldgeräte mit fester Konfiguration und Feldgeräte mit einstellbarer Konfiguration unterschieden werden. Bei einem Feldgerät mit fester Konfiguration ist klar definiert, welche Prozessdaten (bspw. digitale Eingänge oder aktuelle Drehzahl) wann mit welcher Feldbus- (bspw. CAN)-Botschaft übertragen werden. Diese Einstellungen können nachträglich nicht mehr
verändert werden. Oftmals sind Geräte mit fester Konfiguration in der Anschaffung günstiger als baugleiche Geräte, die eine Konfiguration des Gerätes im laufenden Betrieb ermöglichen. Der Grund hierfür liegt in den wesentlich einfacheren Softwarestrukturen und der daraus resultierenden transparenten Geräteimplementierung. Feldgeräte mit einstellbarer Konfiguration müssen vor der Inbetriebnahme konfiguriert werden. Unter Verwendung eines geeigneten Konfigurationswerkzeuges (bspw. ProCANopen) werden alle Geräteparameter definiert. Anschließend wird die so entstandene Konfiguration im Gerät gespeichert. Auch bei einem Feldgerät mit einstellbarer Konfiguration wird die mit dem Konfigurationswerkzeug erstellte Netzwerkkonfiguration in dem Feldgerät gespeichert, sofern die Geräte das "nicht-flüchtige" Speichern (Konfigurationsdaten gehen bei einem Neustart nicht verloren) der Konfigurationsdaten unterstützen. Alternativ hierzu kann die Gerätekonfiguration in einem Konfigurationsmanager abgelegt werden, der beim Systemstart die Konfiguration der konfigurierbaren Geräte durchführt. Der Konfigurationsmanager muss schon im Rahmen der Netzwerkkonfiguration definiert werden. Dieser Ansatz ermöglicht den einfachen Austausch eines defekten Gerätes durch ein neues, baugleiches Gerät (einfache Wartung des Systems).

Ferner kann ein Gateway zwei Feldbussysteme bzw. Netzwerke miteinander koppeln. Grundsätzlich kann es sich bei den beiden Feldbussystemen/Netzwerken um solche eines gleichen Standards oder unterschiedlicher Standards handeln. Dabei werden gemäß dem Stand der Technik Parameter oder Variablen aus dem einen Feldbussystem (bspw. CANopen) über einen definierten Speicherbereich in dem koppelnden Gateway für das zweite Feldbussystem zugänglich gemacht. Allerdings erfordert dies auf der Seite des zweiten Feldbussystems eine aufwendige Zuordnung von Speicherplätzen oder Speicherbereichen zu den Parametern oder Variablen des ersten Systems. Ferner sind Feldgeräte in Subsystemen ohne genaue Kenntnis des Subsystems bzw. der Feldgeräte nicht zugänglich und jede Änderung des Subsystems erfordert eine Anpassung der Firmware.

DE 102011107321 A1 offenbart ein System und Verfahren zur Parametrierung von Feldgeräten eines Automatisierungs- oder Steuerungssystems mit einer übergeordneten Einheit, die über eine erste Kommunikationsverbindung basierend auf einem ersten Feldbusprotokoll mit einem Kommunikationsschnittstellenmodul
verbunden ist. Das Kommunikationsschnittstellenmodul ist über eine zweite Kommunikationsverbindung basierend auf einem zweiten Feldbusprotokoll mit wenigstens einem Feldgerät verbunden. Ein erster Netzwerkdienst überträgt die Parameter des Feldgerätes von der übergeordneten Einheit über die erste Kommunikationsverbindung in eine als Slave-Funktion arbeitende erste Funktionalität des Kommunikationsschnittstellenmoduls. Die in Unterblöcken abgelegten Parameter des Feldgerätes werden durch eine Funktionalität des Kommunikationsschnittstellenmoduls in einem Konfigurationsblock zusammengefasst, in einen Feldbusmaster-Stack des Kommunikationsschnittstellenmoduls geladen und über eine als Master-Funktion arbeitende Funktionalität des Kommunikationsschnittstellenmoduls mittels eines zweiten Netzwerkdienstes über die zweite Kommunikationsverbindung in das Feldgerät übertragen.

### ZUSAMMENFASSUNG DER ERFINDUNG

Es ist eine Aufgabe der Erfindung, die Konfiguration von Feldbusgeräten, insbesondere im Hinblick auf zwei gekoppelte Feldbussysteme (Netzwerke) für den Anwender zu erleichtern.

Gemäß einem Aspekt wird ein Verfahren zur Kommunikation mit Feldgeräten in einem Feldbussystem bereitgestellt. Das Feldbussystem arbeitet nach einem ersten Standard. In dem Feldbussystem nach dem ersten Standard wird ein erstes Feldgerät und ein zweites Feldgerät angeordnet. Das erste Feldgerät und das zweite Feldgerät sind dann über einen Feldbus nach dem ersten Standard gekoppelt. Ganz allgemein wird eine vollständige, vorteilhaft jedoch kundenspezifische Gerätebeschreibungsdatei des zweiten Feldgerätes nach dem ersten Standard auf das erste Feldgerät geladen. Nun kann mit dem zweiten Feldgerät durch das erste Feldgerät (hindurch) kommuniziert werden, so dass Objekte, vorteilhaft kundenspezifische Objekte des zweiten Feldgerätes, auf dem ersten Feldgerät zur Verfügung stehen. Hierdurch wird ein zweites Feldgerät durch ein erstes Feldgerät zugänglich.

Gemäß dem ersten Standard kann ein Objekt durch folgende Angaben definiert werden: einen Parameternamen (ParameterNamen; notwendig); einen Objektypen (ObjectType (VAR); optional); einen Datentypen (DataType; notwendig); einen Zugangstypen (AccessType; notwendig); einen Default-Wert (DefaultValue; optional), das PDOMapping (optional), die SubNumber (optional), einen unteren Grenzwert (LowLimit; optional); einen oberen Grenzwert (HighLimit; optional); ein Flag (ObjFlags; optional) und den Wert CompactSubObj (optional). Hieraus ergibt sich, dass die Minimalangabe für ein Objekt nach dem ersten Standard in der Angabe eines Parameternamens, eines Datentyps und eines Zugangstyps besteht. Ein Beispiel für den Source-Code eines Objektes nach dem ersten Standard unter Verwendung eines Subindex ist bspw.:

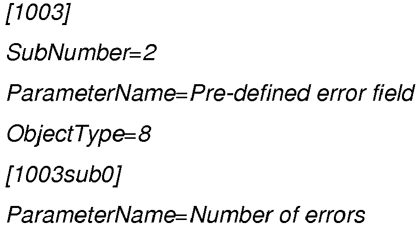

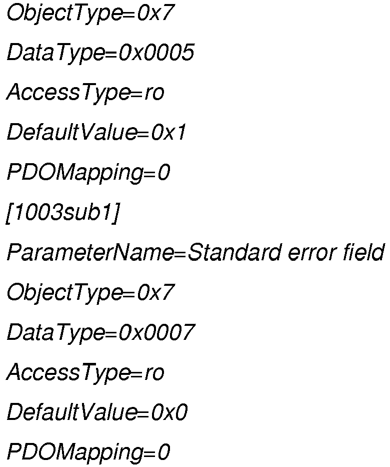

Gemäß einem vorteilhaften Aspekt wird basierend auf den Gerätebeschreibungsdateien nach dem ersten Standard eine Gerätebeschreibungsdatei nach einem zweiten Standard erstellt, welche in dem Feldbussystem nach dem zweiten Standard bereitgestellt wird, so dass eine Steuerung in dem Feldbussystem nach dem zweiten Standard auf Objekte der Feldgeräte nach dem ersten Standard ohne Vermittlung über einen freien Speicherbereich zugreifen kann.

Gemäß einem weiteren Aspekt wird basierend auf den Gerätebeschreibungsdateien nach dem ersten Standard und dem zweiten Standard eine Konfigurationsdatei erstellt, welche auf das erste Feldgerät geladen wird und eine Zuordnung von Parametern/Variablen/Objekten nach dem ersten Standard für den zweiten Standard festlegt.

Eine kundenspezifische Gerätebeschreibungsdatei des zweiten Feldgerätes nach dem ersten Standard weist vorteilhaft weniger Objekte auf als eine vollständige Gerätebeschreibungsdatei des zweiten Feldgerätes.

Das vorstehende Prinzip lässt sich vorteilhaft erweitern. So kann in dem Feldbussystem nach dem ersten Standard ein drittes Feldgerät angeordnet und mit dem Feldbussystem und dem ersten Feldgerät über das Feldbussystem nach dem ersten Standard gekoppelt werden. Eine kundenspezifische Gerätebeschreibungsdatei des dritten Feldgerätes kann dann auch in dem ersten Feldgerät vorliegen, so dass kundenspezifische Objekte des dritten Feldgerätes ebenfalls auf dem ersten Feldgerät vorliegen. Dieses Prinzip kann beliebig erweitert werden. Insgesamt kann ein vollständiges Netzwerk (Feldbussystem) oder Sub-Netz (Teilnetzwerk oder Teilbussystem) mit allen daran gekoppelten Feldgeräten durch ein einziges Feldgerät (vorstehend das erste Feldgerät) repräsentiert werden. Dies erleichtert die Kommunikation, Inbetriebnahme und Änderungen am System/Netzwerk.

Wie vorstehend beschrieben, kann ebenfalls basierend auf den Gerätebeschreibungsdateien nach dem ersten Standard (also mehrere bspw. kundenspezifische oder vollständige Gerätebeschreibungsdateien nach dem ersten Standard) eine Gerätebeschreibungsdatei nach einem zweiten Standard erstellt werden. Diese Gerätebeschreibungsdatei nach dem zweiten Standard kann dann in dem Feldbussystem nach dem zweiten Standard bereitgestellt werden, so dass eine Steuerung in dem Feldbussystem nach dem zweiten Standard auf Objekte der Feldgeräte nach dem ersten Standard ohne Vermittlung über einen freien Speicherbereich zugreifen kann.

Letzteres kann vorteilhaft verbessert werden, wenn basierend auf den Gerätebeschreibungsdateien nach dem ersten Standard und dem zweiten Standard eine Konfigurationsdatei erstellt wird, welche auf das erste Feldgerät geladen wird und eine Zuordnung von Objekten nach dem ersten Standard auf den zweiten Standard festlegt. Vorteilhaft umfasst diese Konfigurationsdatei dann die Zuordnung aller Objekte der Feldgeräte nach dem ersten Standard auf den zweiten Standard.

Wie im Falle des zweiten Feldgerätes, kann die kundenspezifische Gerätebeschreibungsdatei des dritten Feldgerätes nach dem ersten Standard weniger Objekte aufweisen als eine vollständige Gerätebeschreibungsdatei des zweiten Feldgerätes.

Grundsätzlich können die kundenspezifischen Gerätebeschreibungsdateien des ersten Standards automatisch zur Erstellung der Gerätebeschreibungsdatei nach dem zweiten Standard geladen werden.

Gemäß einem weiteren Aspekt kann eine vollständige Gerätebeschreibungsdatei eines Feldgerätes in dem Feldbussystem nach dem ersten Standard automatisch zur Erstellung der Gerätebeschreibungsdatei nach dem zweiten Standard geladen werden, wenn keine kundenspezifische Gerätebeschreibungsdatei eines Feldgerätes nach dem ersten Standard vorliegt.

Allgemein kann das erste Feldgerät ein Gateway sein. Es kommen für die Umsetzung der Aspekte und Ausführungsbeispiele aber auch andere Feldgeräte in Betracht.

Der erste Standard kann ein CANopen Standard sein, wie er eingangs beschrieben wurde und bspw. im CiA 306 Draft Standard Proposal, Version: 1.3.7 vom 18. März 2014 beschrieben ist.

Weitere Normen die für den ersten Standard zur Anwendung gekommen sind:
- /*CiA301*/ *CiA 301, CANopen application layer and communication profile*
- /*CiA302*/ *CiA 302-4, CANopen Additional application layer functions -*
- *Part 4: Network variables and process image*
- /*CiA305*/ *CiA 305, CANopen layer setting services (LSS) and protocols*
- /*CiA401*/*CiA 401, CANopen device profile generic I*/*O modules*
- /*ISO646*/ *ISO*/*IEC 646, ISO 7-bit coded character set for information interchange*

Vorteilhaft ist die Gerätebeschreibungsdatei nach dem ersten Standard eine EDS (Electronic Data Sheet)-Gerätebeschreibungsdatei für den oben beschriebenen CANopen-Standard. Die Feldgeräte für den ersten Standard sind dann für ein Feldbussystem nach dem CANopen-Standard konfiguriert.

Der zweite Standard kann ein Standard für Feldbus (z. B. Profibus, Modbus, DeviceNet, CANopen) sein oder für Industrial Ethernet (z. B. Profinet, ModbusTCP, EthernetIP, Ethercat, Powerlink). Eine Gerätebeschreibungsdatei nach dem zweiten Standard kann eine GSDML Datei sein. Zumindest das erste Feldgerät kann dann eine Vermittlungsfunktion zwischen einem Feldbussystem nach dem ersten Standard und einem Feldbussystem oder Netzwerk nach einem zweiten Standard ausführen.

Der zweite Standard kann ein Standard für Feldbus (z. B. Profibus, Modbus, DeviceNet, CANopen) sein oder für Industrial Ethernet (z. B. Profinet, ModbusTCP, EthernetIP, Ethercat, Powerlink).

Die Standards/Spezifikationen, insbesondere für den zweiten Standard werden durch die jeweiligen Technology Groups oder Foundations definiert und gepflegt, also kontinuierlich verändert, ergänzt und sind unter den folgenden Links im Internet zu finden:
- Profinet PNO http://www.profibus.com/technology/profinet/
- EthernetIP ODVA http://www.odva.org/Technology-Standards/EtherNet-IP/Overview
- ModbusTCP Modbus Organization http://www.modbus.org/ und im Speziellen: ModbusTCP http://www.modbus.org/docs/Modbus_Application_Protocol_V1_1b.pdf

Für Profinet, insbesondere die GSDML Gerätebeschreibung kann bspw. die folgende Version des Standards Anwendung finden:
GSDML Technical Specification for PROFINET IO Version 2.3, date November 2011

Für Ethernet/IP kommt nur beispielsweise die folgende Version in Betracht:
The CIP Networks Library Volume 2: EtherNet/IP Adaptation of CIP, Edition 1.19, April 2015

Ein Feldbus, oder Feldbussystem oder Netzwerk nach dem ersten Standard arbeitet natürlich auch nach einem Protokoll zur Datenübertragung nach dem ersten Standard und ist insgesamt physikalisch nach dem ersten Standard aufgebaut. Ein Feldbus oder Feldbussystem oder Netzwerk nach dem zweiten Standard arbeitet natürlich auch nach einem Protokoll zur Datenübertragung nach dem zweiten Standard und ist insgesamt physikalisch nach dem zweiten Standard aufgebaut.

Es wird ebenfalls ein Feldbussystem bereitgestellt, welches mindestens ein erstes Feldgerät und ein zweites Feldgerät umfasst. Das erste Feldgerät und das zweite Feldgerät sind über einen ersten Feldbus gekoppelt, der nach einem ersten Standard arbeitet, wobei das erste Feldgerät eine vollständige, vorteilhaft jedoch kundenspezifische Gerätebeschreibungsdatei des zweiten Feldgerätes nach dem ersten Standard aufweist, so dass mit dem zweiten Feldgerät unmittelbar über das erste Feldgerät kommuniziert werden kann.

Das Felbussystem kann ferner einen zweiten Feldbus (oder Netzwerk) umfassen (Hauptnetz, Teilnetzwerk) umfassen, der nach einem zweiten Standard arbeitet. Zumindest das erste Feldgerät kann dann eine Vermittlungsfunktion zwischen dem ersten Feldbus nach dem ersten Standard und dem zweiten Feldbus oder Netzwerk nach dem zweiten Standard sein.

Das Feldbussystem umfasst insofern eine Gerätebeschreibungsdatei nach einem zweiten Standard, welche basierend auf den Gerätebeschreibungsdateien nach dem ersten Standard erstellt ist, wobei die Gerätebeschreibungsdatei nach dem zweiten Standard in einem Feldbus nach dem zweiten Standard bereitgestellt ist und das erste Feldgerät an den Feldbus nach dem zweiten Standard gekoppelt ist, so dass eine Steuerung in dem Feldbus nach dem zweiten Standard auf Objekte der Feldgeräte nach dem ersten Standard über das erste Feldgerät ohne Vermittlung über einen freien Speicherbereich zugreifen kann.

In dem Feldbus nach dem ersten Standard kann ein drittes Feldgerät (oder beliebig viele weitere Feldgeräte) angeordnet sein und mit dem Feldbus und dem ersten Feldgerät über den Feldbus nach dem ersten Standard gekoppelt sein. Es kann dann eine kundenspezifische Gerätebeschreibungsdatei des dritten Feldgerätes in dem ersten Feldgerät vorliegen, so dass kundenspezifische Parameter, Variablen und/oder Objekte des zweiten und des dritten Feldgerätes auf dem ersten Feldgerät vorliegen.

Weitere Aspekte des Feldbussystems ergeben sich aus den vorstehenden und nachfolgenden Erläuterungen.

Wie zuvor ausgeführt, kann gemäß einem vorteilhaften Aspekt basierend auf den Gerätebeschreibungsdateien nach dem ersten Standard eine Gerätebeschreibungsdatei nach dem zweiten Standard erstellt werden, welche in dem (zweiten) Feldbus nach dem zweiten Standard bereitgestellt wird, so dass eine Steuerung in dem Feldbus nach dem zweiten Standard auf Objekte der Feldgeräte nach dem ersten Standard ohne Vermittlung über einen freien Speicherbereich zugreifen kann.

Gemäß einem weiteren Aspekt kann das erste Feldgerät eine Konfigurationsdatei aufweisen, die basierend auf den Gerätebeschreibungsdateien nach dem ersten Standard und dem zweiten Standard erstellt wird. Die Konfigurationsdatei enthält eine Zuordnung von Objekten nach dem ersten Standard für den zweiten Standard.

Wie zuvor ausgeführt, kann das Feldbussystem beliebig erweitert werden. Die Gerätebeschreibungsdateien nach dem ersten Standard (vorzugsweise kundenspezifische Gerätebeschreibungsdateien) werden gemeinsam zur Erstellung der Gerätebeschreibungsdatei nach dem zweiten Standard und zur Erstellung der Konfigurationsdatei herangezogen. Für den Anwender bzw. Kunden ergibt sich hierdurch eine deutlich einfachere Inbetriebnahme wie auch Transparenz von Feldbussystemen.

Wie vorstehend verdeutlicht, wird in dem ersten Feldbussystem ein erstes Kommunikationsprotokoll nach dem ersten Standard verwendet. In dem ersten Feldbussystem sind Feldgeräte oder auch Knoten angeordnet, welche miteinander und mit dem ersten Feldgerät oder auch Gateway über den ersten Feldbus gekoppelt sind. Das erste Feldgerät ist ebenfalls mit einem zweiten Feldbussystem oder auch Hauptnetz gekoppelt, das nach einem zweiten Standard arbeitet. Insbesondere wird in dem zweiten Feldbussystem ein zweites Kommunikationsprotokoll verwendet, das nach dem zweiten Standard arbeitet. Das zweite Kommunikationsprotokoll kann vorteilhaft von dem ersten Kommunikationsprotokoll verschieden sein. Insofern können das erste Feldbussystem oder Netzwerk (Subnetz) und das zweite Feldbussystem oder Netzwerk (Hauptnetz) vorteilhaft auch dahingehend unterschieden werden, dass in den beiden Netzwerken zumindest zwei verschiedene Kommunikationsprotokolle verwendet werden.

Die vorliegende Erfindung stellt unter anderem Verfahren und Systeme zur vereinfachten Darstellung eines komplexen Subnetzes bereit. Die Gesamtheit des Subnetzes wird durch einen Vertreter (z.B. erstes Feldgerät (Gateway)) dargestellt. Dadurch agiert das Feldgerät als Proxy und vertritt transparent die Teilnehmer des Subnetzes. Das System kann als Blackbox betrachtet werden.

Dies wird realisiert indem das Feldgerät zur Laufzeit um Objekte und Prozesswerte aus einem Subnetz erweitert wird. Hierzu stellt jeder Subnetzteilnehmer (zweites, drittes etc. Feldgerät) seine relevanten Parameter in einer kundenspezifischen Gerätebeschreibungsdatei (auch "Consult EDS") zur Verfügung. Diese werden über einen Datei-Upload abgeholt und interpretiert. Der Vertreter erweitert seine Datenbank sowie seine Gerätebeschreibungsdatei um die Objekte/Parameter des Subnetzes. So kann ein Subnetz einer beliebigen Zusammensetzung von Feldgeräten zur Laufzeit von einem Vertreter (erstes Feldgerät) dargestellt werden. Die kundenspezifische Gerätebeschreibungsdatei kann das Feldgerät korrekt ausweisen. Insbesondere kann es sich bei der Gerätebeschreibungsdatei um eine CANopen EDS Datei handeln. Alle neuen Objekte sind adressierbar und können von extern abgerufen/bearbeitet werden. Dadurch kann eine automatische Abbildung eines Subnetzes durch ein Feldgerät wie z.B. ein Gateway erfolgen, ohne dabei eine Konfiguration des Feldgerätes oder eine Anpassung der Software vorzunehmen. So können Feldgeräte zur Laufzeit ein Subsystem repräsentieren und vertreten ohne konfiguriert werden zu müssen. Dadurch wird insbesondere der Einsatz in einem vorher unbekannten System ermöglicht. Das Feldgerät kann das eigene Objektverzeichnis sowie die Gerätebeschreibung weitergeben. Ein Feldgerät kann sich auch bei einer Erweiterung der Gerätebeschreibungsdatei EDS mit den neuen Objekten ausweisen. Dadurch werden die Verfahren und Systeme flexibel und ressourcenschonend, da das Feldgerät keinen Speicherplatz für mögliche Objekte vorhalten muss.

### KURZE BESCHREIBUNG DER FIGUREN

Weitere Aspekte und Merkmale der Erfindung werden anhand der nachfolgenden Beschreibung von Ausführungsbeispielen unter Bezugnahme auf die beigefügten Figuren deutlich, wobei
FIG. 1 eine vereinfachte Blockdarstellung eines Ausführungsbeispiels ist, und
FIG. 2 eine vereinfachte Darstellung von Aspekten eines Ausführungsbeispiels ist.

### AUSFÜHRLICHE BESCHREIBUNG DER AUSFÜHRUNGSBEISPIELE

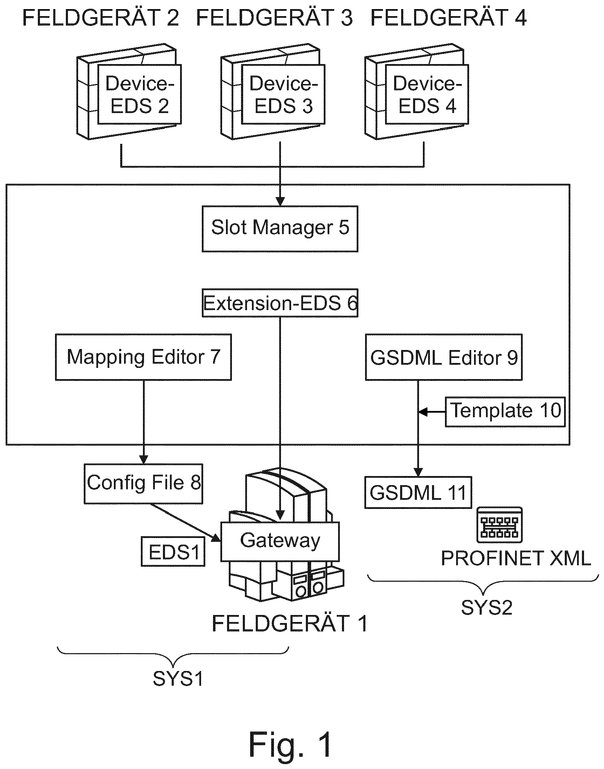

FIG. 1 ist eine vereinfachte Blockdarstellung eines Ausführungsbeispiels. Dargestellt sind vier Feldgeräte 1, 2, 3 und 4. Bei dem Feldgerät 1 kann es sich bspw. um ein Gateway oder einen Regler handeln. Auch dieses Feldgerät 1 verfügt über eine Gerätebeschreibungsdatei EDS1 nach dem ersten Standard (bspw. CANopen). Bei den Feldgeräten 2, 3 und 4 handelt es sich um Feldgeräte, welche in ein Feldbussystem SYS1 nach einem ersten Standard, vorliegend nach dem CANopen-Standard, eingebunden sind und gemäß diesem Standard arbeiten. Die Feldgeräte 2, 3 und 4 umfassen jeweils eine EDS-Gerätebeschreibungsdatei EDS2, EDS3 und EDS4, mit der das jeweilige Feldgerät 2, 3, und 4 nach dem ersten Standard (bspw. CANopen) in Betrieb genommen werden kann.

Ferner liegt ein Slot Manager 5 vor, über den die Feldgeräte 2, 3, 4 angesprochen werden.

Aus den EDS-Gerätebeschreibungsdateien der Feldgeräte 2, 3 und 4 wird nun eine gemeinsame EDS-Gerätedatei 6 erstellt (Extension-EDS). Diese wird auf das erste Feldgerät 1 geladen. Gleichzeitig wird eine Gerätebeschreibungsdatei (bspw. GSDML) nach einem zweiten Standard (vorliegend bspw. Profinet) erstellt. Die zweite Gerätebeschreibungsdatei GSDML dient dazu, das erste Feldgerät 1 und alle anderen Feldgeräte 2, 3, 4 innerhalb des Feldbussystems SYS1 gemäß dem zweiten Standard anzusprechen bzw. mit den Feldgeräten 2, 3 und 4 nach dem ersten Standard durch das erste Feldgerät 1 zu kommunizieren. Gemäß einem vorteilhaften Aspekt der Erfindung werden dabei alle Gerätebeschreibungsdateien nach dem ersten Standard, also im vorliegenden Beispiel die EDS1, EDS2, EDS3, EDS4 gemeinsam zur Erstellung der Gerätebeschreibungsdatei GSDML verwendet. Zusätzlich wird eine Konfigurationsdatei 8 (Config-File) erstellt. Diese übernimmt das "Mapping" bzw. die Zuordnung oder Übersetzung von Objekten bzw. Parametern gemäß den beiden Standards der Feldbusse oder Feldbussysteme SYS1 und SYS2.

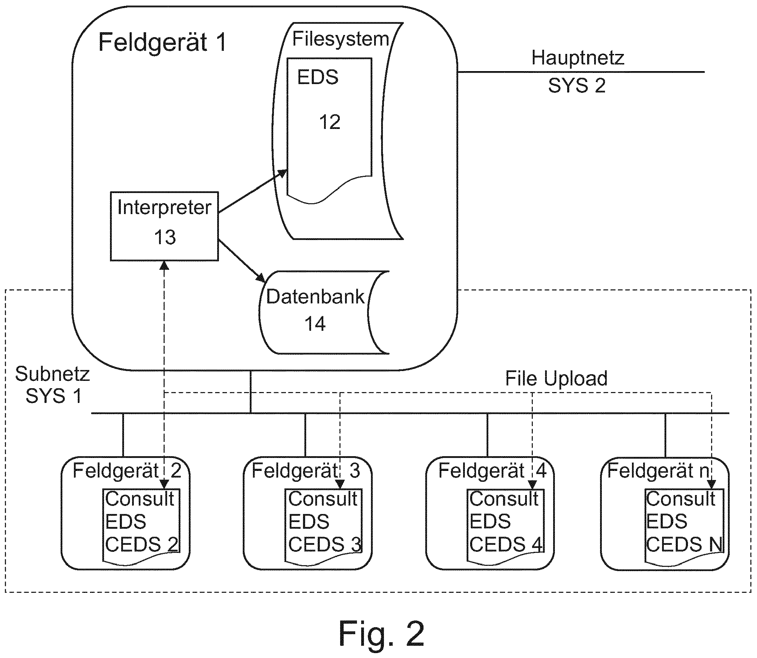

FIG. 2 ist eine vereinfachte Darstellung von Aspekten eines Ausführungsbeispiels. Das erste Feldgerät 1 kann wieder ein Gateway oder ein anderes Feldgerät sein. Dieses ist an ein Hauptnetz SYS2 gekoppelt, das in der vorliegenden Terminologie nach dem zweiten Standard (Feldbus (z. B. Profibus, Modbus, DeviceNet, CANopen) oder Industrial Ethernet (z. B. Profinet, ModbusTCP, EthernetIP, Ethercat, Powerlink)) arbeitet. Die weiteren Feldgeräte 2, 3, 4 bis N befinden sich in dem ersten Feldbussystem SYS1 und arbeiten entsprechend nach einem ersten Standard. Die entsprechenden Gerätebeschreibungsdateien der Feldgeräte 2, 3, 4 bis N werden als CEDS2, CEDS3, CEDS4 bis CEDSN bezeichnet. Bei diesen Gerätebeschreibungsdateien kann es sich um solche nach einem ersten Standard handeln. Außerdem können diese Gerätebeschreibungsdateien vorteilhaft kundenspezifische Gerätebeschreibungsdateien (Consult-EDS) sein. Diese unterscheiden sich von vollständigen Gerätebeschreibungsdateien dadurch, dass sie nur einen Teil der insgesamt pro Feldgerät 2, 3, 4, bis N verfügbaren Objekte/Variablen/Parameter umfassen.

Gemäß einem Aspekt werden diese kundenspezifischen Gerätebeschreibungsdateien CEDS2, CEDS3, CEDS4 bis CEDSN in einem automatischen Datei-Upload (File-Upload) auf das erste Feldgerät 1 geladen. Dort können sie mit einem Interpreter 13 geparst werden und die Datenbank 14 damit ergänzt werden.

Da in dem zweiten Feldbussystem SYS2 ebenfalls eine vollständige Gerätebeschreibungsdatei (bspw. GSDML) nach dem zweiten Standard vorliegt, welche alle Objekte der Feldgeräte 2, 3, 4 bis N enthält, kann nun über das erste Feldgerät 1 auf das Subnetz SYS1, welches nach dem ersten Standard arbeitet, zugegriffen werden, ohne dass ein aufwändiges Adress-Mapping mittels eines reservierten Speicherbereichs notwendig ist.

Soweit für ein Feldgerät keine kundenspezifische Gerätebeschreibung vorliegt, kann auch die vollständige Gerätebeschreibungsdatei geladen werden.

## Patentansprüche

1. Verfahren zur Kommunikation mit Feldgeräten in einem Feldbussystem, das nach einem ersten Standard arbeitet, mit den Schritten: Anordnen eines ersten Feldgerätes und eines zweiten Feldgerätes in dem ersten Feldbussystem, Koppeln des ersten Feldgerätes und des zweiten Feldgerätes über einen ersten Feldbus nach dem ersten Standard, Laden einer kundenspezifischen Gerätebeschreibungsdatei des zweiten Feldgerätes nach dem ersten Standard in dem ersten Feldgerät und Kommunizieren mit dem zweiten Feldgerät durch das erste Feldgerät und den ersten Feldbus, so dass kundenspezifische Objekte und/oder Parameter und/oder Variablen zur Beschreibung der Funktionen und/oder Eigenschaften des zweiten Feldgerätes auf dem ersten Feldgerät zur Verfügung stehen,
wobei das Verfahren **dadurch gekennzeichnet ist, dass** basierend auf der kundenspezifischen Gerätebeschreibungsdatei nach dem ersten Standard eine Gerätebeschreibungsdatei nach einem zweiten Standard erstellt wird, welche in einem Feldbussystem nach dem zweiten Standard bereitgestellt wird, so dass eine Steuerung in dem Feldbussystem nach dem zweiten Standard auf Parameter und/oder Variablen und/oder Objekte der Feldgeräte nach dem ersten Standard über das erste Feldgerät ohne Vermittlung über einen freien Speicherbereich zugreifen kann, und
wobei die kundenspezifische Gerätebeschreibungsdatei des ersten Standards automatisch zur Erstellung geladen wird, so dass damit die Gerätebeschreibungsdatei nach dem zweiten Standard erstellt wird.

2. Verfahren nach Anspruch 1, wobei basierend auf der kundenspezifischen Gerätebeschreibungsdatei nach dem ersten Standard und der Gerätebeschreibungsdatei nach dem zweiten Standard eine Konfigurationsdatei erstellt wird, welche auf das erste Feldgerät geladen wird und eine Zuordnung von Parametern und/oder Variablen und/oder Objekten von dem ersten Standard auf den zweiten Standard und umgekehrt festlegt.

3. Verfahren nach Anspruch 1 oder 2, wobei die kundenspezifische Gerätebeschreibungsdatei des zweiten Feldgerätes nach dem ersten Standard weniger Parameter und/oder Variablen und/oder Objekte zur Beschreibung der Funktionen und/oder Eigenschaften des zweiten Feldgerätes aufweist als eine vollständige Gerätebeschreibungsdatei des zweiten Feldgerätes, wobei die vollständige Gerätebeschreibungsdatei des zweiten Feldgerätes alle Parameter und/oder Variablen und/oder Objekte zur Beschreibung der Funktionen und/oder Eigenschaften des zweiten Feldgerätes umfasst.

4. Verfahren nach einem der Ansprüche 2 bis 3, wobei eine vollständige Gerätebeschreibungsdatei eines Feldgerätes in dem Feldbussystem nach dem ersten Standard automatisch zur Erstellung der Gerätebeschreibungsdatei nach dem zweiten Standard geladen wird, wenn keine kundenspezifische Gerätebeschreibungsdatei vorliegt.

5. Verfahren nach einem der vorstehenden Ansprüche, wobei das erste Feldgerät ein Gateway ist und/oder der erste Standard CANopen ist und/oder der zweite Standard ein Standard für Feldbus ist und/oder ein Standard für wenigstens einen aus Profibus, Modbus, DeviceNet, oder CANopen oder für Industrial Ethernet, insbesondere Profinet, ModbusTCP, EthernetIP, Ethercat und Powerlink ist.

6. Feldbussystem umfassend ein erstes Feldgerät und ein zweites Feldgerät, welche über einen ersten Feldbus gekoppelt sind, der nach einem ersten Standard arbeitet, wobei das erste Feldgerät eine kundenspezifische Gerätebeschreibungsdatei des zweiten Feldgerätes nach dem ersten Standard aufweist, so dass mit dem zweiten Feldgerät unmittelbar über das erste Feldgerät kommuniziert werden kann, so dass kundenspezifische Objekte und/oder Parameter und/oder Objekte zur Beschreibung der Funktionen und/oder Eigenschaften des zweiten Feldgerätes auf dem ersten Feldgerät zur Verfügung stehen,
wobei das Feldbussystem **dadurch gekennzeichnet ist, dass** es eine Gerätebeschreibungsdatei nach einem zweiten Standard umfasst, welche basierend auf der kundenspezifischen Gerätebeschreibungsdatei nach dem ersten Standard erstellt ist, wobei die Gerätebeschreibungsdatei nach dem zweiten Standard in einem Feldbus nach dem zweiten Standard bereitgestellt wird und das erste Feldgerät an den Feldbus nach dem zweiten Standard gekoppelt ist, so dass eine Steuerung in dem Feldbus nach dem zweiten Standard auf Parameter und/oder Variablen und/oder Objekte der Feldgeräte nach dem ersten Standard über das erste Feldgerät ohne Vermittlung über einen freien Speicherbereich zugreifen kann, und
wobei die kundenspezifische Gerätebeschreibungsdatei nach dem ersten Standard automatisch zur Erstellung geladen wird, so dass damit die Gerätebeschreibungsdatei nach dem zweiten Standard erstellt wird.

7. Feldbussystem nach Anspruch 6, wobei in dem Feldbus nach dem ersten Standard ein drittes Feldgerät angeordnet ist und mit dem Feldbus und dem ersten Feldgerät über den Feldbus nach dem ersten Standard gekoppelt ist und eine kundenspezifische Gerätebeschreibungsdatei des dritten Feldgerätes in dem ersten Feldgerät vorliegt, so dass kundenspezifische Parameter und/oder Variablen und/oder Objekte des zweiten und des dritten Feldgerätes auf dem ersten Feldgerät vorliegen.

8. Feldbussystem nach Anspruch 7, wobei basierend auf der Gerätebeschreibungsdatei nach dem ersten Standard eine Gerätebeschreibungsdatei nach dem zweiten Standard erstellt wird, welche in dem Feldbus nach dem zweiten Standard bereitgestellt wird, so dass eine Steuerung in dem Feldbus nach dem zweiten Standard auf Objekte der Feldgeräte nach dem ersten Standard ohne Vermittlung über einen freien Speicherbereich zugreifen kann.

9. Feldbussystem nach einem der Ansprüche 6 bis 8, wobei basierend auf der Gerätebeschreibungsdatei nach dem ersten Standard und der Gerätebeschreibungsdatei nach dem zweiten Standard eine Konfigurationsdatei erstellt wird, welche auf das erste Feldgerät geladen wird und eine Zuordnung von Parametern und/oder Variablen und/oder Objekten von dem ersten Standard auf den zweiten Standard festlegt.

10. Feldbussystem nach einem der Ansprüche 6 bis 9, wobei eine kundenspezifische Gerätebeschreibungsdatei eines Feldgerätes nach dem ersten Standard weniger Parameter und/oder Variablen und/oder Objekte zur Beschreibung der Funktionen und/oder Eigenschaften des Feldgerätes aufweist als eine vollständige Gerätebeschreibungsdatei des Feldgerätes nach dem ersten Standard, wobei die vollständige Gerätebeschreibungsdatei des Feldgerätes alle Parameter und/oder Variablen und/oder Objekte zur Beschreibung der Funktionen und/oder Eigenschaften des Feldgerätes umfasst.

## Claims

1. A method for the communication with field devices in a fieldbus system working in accordance with a first standard, comprising the steps of: arranging a first field device and a second field device in the first fieldbus system; coupling the first field device and the second field device via a first fieldbus in accordance with the first standard; loading a customer-specific device description file of the second field device in accordance with the first standard in the first field device; and communicating with the second field device through the first field device and the first fieldbus so that customer-specific objects and/or parameters and/or variables for describing the functions and/or properties of the second field device are available on the first field device,
the method being **characterized in that** based on the customer-specific device description file in accordance with the first standard, a device description file in accordance with a second standard is created which is provided in a fieldbus system in accordance with the second standard so that a controller in the fieldbus system in accordance with the second standard can access parameters and/or variables and/or objects of the field devices in accordance with the first standard via the first field device without the intermediary of a free memory area, and
wherein the customer-specific device description file of the first standard is automatically loaded for creation, so that it is used to create the device description file in accordance with the second standard.

2. The method according to claim 1, wherein based on the customer-specific device description file in accordance with the first standard and the device description file in accordance with the second standard, a configuration file is created which is loaded on the first field device and defines an allocation of parameters and/or variables and/or objects from the first standard to the second standard and vice versa.

3. The method according to claim 1 or 2, wherein the customer-specific device description file of the second field device in accordance with the first standard has fewer parameters and/or variables and/or objects for describing the functions and/or properties of the second field device than a complete device description file of the second field device, the complete device description file of the second field device comprising all parameters and/or variables and/or objects for describing the functions and/or properties of the second field device.

4. The method according to any of claims 2 to 3, wherein a complete device description file of a field device in the fieldbus system in accordance with the first standard is automatically loaded for creating the device description file in accordance with the second standard if no customer-specific device description file is available.

5. The method according to any of the preceding claims, wherein the first field device is a gateway and/or the first standard is CANopen and/or the second standard is a standard for Fieldbus and/or is a standard for at least one of Profibus, Modbus, DeviceNet or CANopen or for Industrial Ethernet, in particular Profinet, ModbusTCP, EthernetIP, Ethercat and Powerlink.

6. A fieldbus system comprising a first field device and a second field device, which are coupled via a first fieldbus working in accordance with a first standard, the first field device having a customer-specific device description file of the second field device in accordance with the first standard, so that communication with the second field device can be effected directly via the first field device, so that customer-specific objects and/or parameters and/or objects for describing the functions and/or properties of the second field device are available on the first field device,
the fieldbus system being **characterized in that** it comprises a device description file in accordance with a second standard, which is created based on the customer-specific device description file in accordance with the first standard, the device description file in accordance with the second standard being provided in a fieldbus in accordance with the second standard and the first field device being coupled to the fieldbus in accordance with the second standard so that a controller in the fieldbus in accordance with the second standard can access parameters and/or variables and/or objects of the field devices in accordance with the first standard via the first field device without the intermediary of a free memory area, and
wherein the customer-specific device description file in accordance with the first standard is automatically loaded for creation, so that it is used to create the device description file in accordance with the second standard.

7. The fieldbus system according to claim 6, wherein a third field device is arranged in the fieldbus in accordance with the first standard and is coupled to the fieldbus and the first field device via the fieldbus in accordance with the first standard, and a customer-specific device description file of the third field device is available in the first field device, so that customer-specific parameters and/or variables and/or objects of the second and third field devices are available on the first field device.

8. The fieldbus system according to claim 7, wherein based on the device description file in accordance with the first standard, a device description file in accordance with the second standard is created, which is provided in the fieldbus in accordance with the second standard, so that a controller in the fieldbus in accordance with the second standard can access objects of the field devices in accordance with the first standard without the intermediary of a free memory area.

9. The fieldbus system according to any of claims 6 to 8, wherein based on the device description file in accordance with the first standard and the device description file in accordance with the second standard, a configuration file is created which is loaded on the first field device and defines an allocation of parameters and/or variables and/or objects from the first standard to the second standard.

10. The fieldbus system according to any of claims 6 to 9, wherein a customer-specific device description file of a field device in accordance with the first standard has fewer parameters and/or variables and/or objects for describing the functions and/or properties of the field device than a complete device description file of the field device in accordance with the first standard, the complete device description file of the field device comprising all parameters and/or variables and/or objects for describing the functions and/or properties of the field device.

## Revendications

1. Procédé de communication avec des appareils de terrain dans un système de bus de terrain fonctionnant selon un premier standard, comprenant les étapes suivantes : agencement d'un premier appareil de terrain et d'un deuxième appareil de terrain dans le premier système de bus de terrain, couplage du premier appareil de terrain et du deuxième appareil de terrain par l'intermédiaire d'un premier bus de terrain selon le premier standard, charge d'un fichier de description d'appareil personnalisé du deuxième appareil de terrain selon le premier standard dans le premier appareil de terrain, et communication avec le deuxième appareil de terrain à travers le premier appareil de terrain et le premier bus de terrain de sorte que des objets et/ou des paramètres et/ou des variables personnalisés pour la description des fonctions et/ou des propriétés du deuxième appareil de terrain sont disponibles sur le premier appareil de terrain,
le procédé étant **caractérisé en ce que** sur la base du fichier de description d'appareil personnalisé selon le premier standard, un fichier de description d'appareil selon un deuxième standard est créé, lequel est fourni dans un système de bus de terrain selon le deuxième standard, de sorte qu'une commande dans le système de bus de terrain selon le deuxième standard est apte à accéder à des paramètres et/ou des variables et/ou des objets des appareils de terrain selon le premier standard par l'intermédiaire du premier appareil de terrain, sans l'entremise d'une zone de mémorisation libre, et
le fichier de description d'appareil personnalisé du premier standard étant automatiquement chargé pour la création, de sorte qu'il est utilisé pour créer le fichier de description d'appareil selon le deuxième standard.

2. Procédé selon la revendication 1, un fichier de configuration étant créé sur la base du fichier de description d'appareil personnalisé selon le premier standard et du fichier de description d'appareil selon le deuxième standard, lequel est chargé sur le premier appareil de terrain et détermine une attribution de paramètres et/ou de variables et/ou d'objets du premier standard au deuxième standard et vice versa.

3. Procédé selon la revendication 1 ou 2, le fichier de description d'appareil personnalisé du deuxième appareil de terrain selon le premier standard présentant moins de paramètres et/ou de variables et/ou d'objets pour la description des fonctions et/ou des propriétés du deuxième appareil de terrain qu'un fichier de description d'appareil complet du deuxième appareil de terrain, le fichier de description d'appareil complet du deuxième appareil de terrain comprenant l'ensemble des paramètres et/ou des variables et/ou des objets pour la description des fonctions et/ou des propriétés du deuxième appareil de terrain.

4. Procédé selon l'une des revendications 2 à 3, un fichier de description d'appareil complet d'un appareil de terrain dans le système de bus de terrain selon le premier standard étant automatiquement chargé pour la création du fichier de description d'appareil selon le deuxième standard lorsqu'un fichier de description d'appareil personnalisé est absent.

5. Procédé selon l'une des revendications précédentes, le premier appareil de terrain étant une passerelle et/ou le premier standard étant CANopen et/ou le deuxième standard étant un standard pour bus de terrain et/ou un standard pour au moins l'un parmi Profibus, Modbus, DeviceNet ou CANopen ou pour Industrial Ethernet, en particulier Profinet, ModbusTCP, EthernetlP, Ethercat et Powerlink.

6. Système de bus de terrain, comprenant un premier appareil de terrain et un deuxième appareil de terrain couplés par l'intermédiaire d'un premier bus de terrain qui fonctionne selon un premier standard, le premier appareil de terrain présentant un fichier de description d'appareil personnalisé du deuxième appareil de terrain selon le premier standard, de sorte qu'il est possible de communiquer avec le deuxième appareil de terrain directement par l'intermédiaire du premier appareil de terrain, de sorte que des objets et/ou des paramètres personnalisés et/ou des objets pour la description des fonctions et/ou des propriétés du deuxième appareil de terrain sont disponibles sur le premier appareil de terrain,
le système de bus de terrain étant **caractérisé en ce qu'**il comprend un fichier de description d'appareil selon un deuxième standard qui est créé sur la base du fichier de description d'appareil personnalisé selon le premier standard, le fichier de description d'appareil selon le deuxième standard étant fourni dans un bus de terrain selon le deuxième standard, et le premier appareil de terrain étant couplé au bus de terrain selon le deuxième standard, de sorte qu'une commande dans le bus de terrain selon le deuxième standard est apte à accéder à des paramètres et/ou des variables et/ou des objets des appareils de terrain selon le premier standard par l'intermédiaire du premier appareil de terrain, sans l'entremise d'une zone de mémorisation libre, et
le fichier de description d'appareil personnalisé selon le premier standard étant automatiquement chargé pour la création, de sorte qu'il est utilisé pour créer le fichier de description d'appareil selon le deuxième standard.

7. Système de bus de terrain selon la revendication 6, un troisième appareil de terrain étant agencé dans le bus de terrain selon le premier standard et étant couplé au bus de terrain et au premier appareil de terrain par l'intermédiaire du bus de terrain selon le premier standard, et un fichier de description d'appareil personnalisé du troisième appareil de terrain étant présent dans le premier appareil de terrain, de sorte que des paramètres et/ou des variables et/ou des objets personnalisés du deuxième et du troisième appareil de terrain sont présents sur le premier appareil de terrain.

8. Système de bus de terrain selon la revendication 7, un fichier de description d'appareil selon le deuxième standard qui est fourni dans le bus de terrain selon le deuxième standard étant créé sur la base du fichier de description d'appareil selon le premier standard, de sorte qu'une commande dans le bus de terrain selon le deuxième standard est apte à accéder à des objets des appareils de terrain selon le premier standard sans l'entremise d'une zone de mémorisation libre.

9. Système de bus de terrain selon l'une des revendications 6 à 8, un fichier de configuration étant créé sur la base du fichier de description d'appareil selon le premier standard et du fichier de description d'appareil selon le deuxième standard, lequel est chargé sur le premier appareil de terrain et détermine une attribution de paramètres et/ou de variables et/ou d'objets du premier standard au deuxième standard.

10. Système de bus de terrain selon l'une des revendications 6 à 9, un fichier de description d'appareil personnalisé d'un appareil de terrain selon le premier standard présentant moins de paramètres et/ou de variables et/ou d'objets pour la description des fonctions et/ou des propriétés de l'appareil de terrain qu'un fichier de description d'appareil complet de l'appareil de terrain selon le premier standard, le fichier de description d'appareil complet de l'appareil de terrain comprenant l'ensemble des paramètres et/ou des variables et/ou des objets pour la description des fonctions et/ou des propriétés de l'appareil de terrain.
